# EUROPEAN PATENT APPLICATION

(11) **EP 3 859 475 A1**
(43) Date of publication of application: **04.08.2021**
(21) Application number: 18935382.4
(22) Date of filing: 25.09.2018
(51) Int. Cl.: G05D 1/02

(54) **INFORMATION PROCESSING DEVICE AND MOBILE ROBOT**

(71) Applicant: Chiba Institute of Technology, Narashino-shi, Chiba 275-0016 (JP)
(72) Inventor: YOSHIDA, Tomoaki, Narashino-shi, Chiba 275-0016 (JP); FURUTA, Takayuki, Narashino-shi, Chiba 275-0016 (JP); YAMATO, Hideaki, Narashino-shi, Chiba 275-0016 (JP); IRIE, Kiyoshi, Narashino-shi, Chiba 275-0016 (JP); MATSUZAWA, Takaaki, Narashino-shi, Chiba 275-0016 (JP); SHIMIZU, Masaharu, Narashino-shi, Chiba 275-0016 (JP)
(74) Representative: Stöckeler, Ferdinand
(86) International application number: PCT/JP2018/035294
(87) International publication number: WO 2020/065701

(57) **Abstract**

Provided are an information processing apparatus and a mobile robot configured so that influence of a change in the posture of a mobile body can be reduced and the accuracy of measurement of a distance to a target object can be improved. A mobile robot 1 includes a control section 2 configured to drivably control each unit of a robot body 1A, a detection section 3 configured to detect a target object around the robot body 1A, and a mobile section 4 configured to move the robot body 1A. The detection section 3 includes first distance sensors 31 configured to detect distances to first positions P1 on a floor surface F in a movement direction D1 of the robot body 1A and second distance sensors 32 configured to detect distances to second positions P2. The control section 2 compares changes in the distances to the first position P1 and the second position P2, and based on such comparison, distinguishes a distance change due to a change in the posture of the robot body 1A and a distance change due to the shape of the floor surface F from each other.

## Description

### TECHNICAL FIELD

The present invention relates to an information processing apparatus and a mobile robot.

### BACKGROUND ART

Typically, various autonomously-runnable mobile robots such as a service robot or a home robot, specifically a cleaning robot, a security robot, a transfer robot, a guidance robot, a nursing-care robot, an agricultural robot, etc., have been in practical use. For example, a mobile robot autonomously running along a floor surface in running environment generally includes a distance sensor configured to measure a distance to a target object such as a floor surface or an obstacle for the purpose of sensing an obstacle, a step, etc. present in the running environment, and a distance measurement system using such a distance sensor has been proposed (see, e.g., Patent Literature 1).

The distance measurement system (an information processing apparatus) described in Patent Literature 1 includes a robot body (a mobile body) runnable along a floor surface by means of drive wheels, a distance sensor (a distance measurement sensor) configured to measure a distance to a target object in the front of the robot body in a running direction, and a control apparatus configured to control a drive unit of the drive wheels based on a measurement result of the distance sensor. The distance sensor includes a first distance measurement sensor for a short range and a second distance measurement sensor for a long range. Measurement data measured by each sensor is integrated such that a measurement area in the front in the running direction is expanded.

### CITATION LIST

### PATENT LITERATURE

PATENT LITERATURE 1: JP-A-2014-21625

### SUMMARY OF THE INVENTION

### PROBLEMS TO BE SOLVED BY THE INVENTION

When the distance to the target object is measured by the distance sensor, if the posture of the mobile body changes due to, e.g., movement of the wheel over a protrusion on the floor surface, the posture change influences the measurement data of the distance sensor, and for this reason, the distance to the target object cannot be accurately measured. That is, in the typical distance measurement system described in Patent Literature 1, two distance sensors for the short range and the long range are provided, but measurement results of two distance sensors simultaneously change in association with the change in the posture of the mobile body. Thus, when the distance to the target object is calculated based on the measurement data obtained by two distance sensors, there is a probability that failure such as identification of the presence of, e.g., non-existent asperities or obstacle or neglecting of, e.g., existent asperities or obstacle is caused.

The present invention is intended to provide an information processing apparatus and a mobile robot configured so that influence of a change in the posture of a mobile body can be reduced and the accuracy of measurement of a distance to a target object can be improved.

### SOLUTION TO THE PROBLEMS

The information processing apparatus of the present invention is an information processing apparatus for processing movement information on a mobile body moving along a predetermined surface in environment. The information processing apparatus includes a first distance sensor provided at the mobile body and configured to detect a distance to a first position on the predetermined surface, a second distance sensor provided at the mobile body and configured to detect a distance to a second position on the predetermined surface, and a control section configured to control the first distance sensor and the second distance sensor. The second position is set to a position closer to the mobile body than the first position is to along a movement direction of the mobile body. The control section includes a distance change acquisition unit configured to acquire changes in the distances, which are detected by the first distance sensor and the second distance sensor, to the first position and the second position, a distance change comparison unit configured to compare the changes, which are acquired by the distance change acquisition unit, in the distances to the first position and the second position, and a distance change distinguishing unit configured to distinguish, based on a comparison result obtained by the distance change comparison unit, a distance change due to a change in the posture of the mobile body and a distance change due to the shape of the predetermined surface.

According to such as aspect of the present invention, the distance change distinguishing unit distinguishes the distance change (a change with the same phase) due to the change in the posture of the mobile body and the distance change (a change with a phase difference) due to the shape of the predetermined surface in the environment from each other, and excludes the distance change due to the change in the posture of the mobile body while employing the distance change due to the shape of the predetermined surface in the environment. Thus, a target object such as asperities or an obstacle can be accurately detected. Thus, influence of the change in the posture of the mobile body on distance measurement can be reduced, and the accuracy of measurement of the distance to the target object on the predetermined surface, such as asperities or an obstacle, can be improved.

In the present invention, the first distance sensor preferably detects distances to multiple first positions set along a cross direction crossing the movement direction of the mobile body, and the second distance sensor preferably detects distances to multiple second positions provided along the cross direction crossing the movement direction of the mobile body and corresponding to the multiple first positions.

According to such a configuration, the information processing apparatus can detect the distance change due to the shape of the predetermined surface in the environment within a predetermined area.

In the present invention, the information processing apparatus preferably further includes a posture detection section configured to detect the posture of the mobile body. The first distance sensor and the second distance sensor preferably include a direction changing unit configured to change a distance detection direction. The control section preferably causes the direction changing unit to change the distance detection directions of the first distance sensor and the second distance sensor such that a distance to the predetermined surface is detectable in a case where the posture detection section has detected the change in the posture of the mobile body.

According to such a configuration, the information processing apparatus can reliably detect the distance to the predetermined surface in the environment even in a case where the posture of the mobile body has changed.

In the present invention, the second distance sensor preferably has a lower resolution than that of the first distance sensor.

According to such a configuration, the second distance sensor detects the distance to the second position at the position closer to the mobile body than the first position is to along the movement direction of the mobile body, and has a lower resolution than that of the first distance sensor. Thus, balance between the change in the distance detected by the first distance sensor and the change in the distance detected by the second distance sensor can be achieved. According to this configuration, the distance change distinguishing unit can easily distinguish the distance change due to the change in the posture of the mobile body and the distance change due to the shape of the predetermined surface in the environment from each other.

In the present invention, the information processing apparatus preferably further includes the posture detection section configured to detect the posture of the mobile body. The control section preferably includes a reliability evaluation unit configured to evaluate, based on the change in the posture of the mobile body detected by the posture detection section, the reliabilities of the changes, which are acquired by the distance change acquisition unit, in the distances to the first position and the second position. The distance change comparison unit preferably determines, based on an evaluation result of the reliability evaluation unit, whether or not the changes, which are acquired by the distance change acquisition unit, in the distances to the first position and the second position are to be compared.

According to such a configuration, the distance change comparison unit determines, based on the evaluation result of the reliability evaluation unit, whether or not the changes, which are acquired by the distance change acquisition unit, in the distances to the first position and the second position are to be compared, and therefore, comparison between the less-reliable changes in the distances to the first position and the second position can be avoided and a calculation cost can be reduced.

The mobile robot of the present invention includes any one of the above-described information processing apparatus and a mobile section configured to move the mobile body.

According to such an aspect of the present invention, the mobile robot can reliably detect the distance change (e.g., asperities or an obstacle) due to the shape of the predetermined surface in the environment. Thus, influence of the change in the posture of the mobile robot (the mobile body) on distance measurement can be reduced, and the accuracy of measurement of the distance to the target object on the predetermined surface, such as asperities or an obstacle, can be improved. The mobile robot can properly determine whether or not the mobile robot avoids or moves over the obstacle upon movement.

### BRIEF DESCRIPTION OF THE DRAWINGS

Fig. 1 illustrates a side view of a mobile robot according to one embodiment of the present invention;
Fig. 2 illustrates a plan view of the mobile robot;
Fig. 3 illustrates a block diagram of the mobile robot;
Fig. 4 illustrates views of operation of the mobile robot;
Fig. 5 illustrates conceptual diagrams of measurement information obtained by the mobile robot;
Fig. 6 illustrates conceptual diagrams of measurement information obtained in association with a change in the posture of the mobile robot;
Fig. 7 illustrates a flowchart of the steps of processing by an information processing apparatus in the mobile robot;
Fig. 8 illustrates views of vehicle height adjustment operation of the mobile robot;
Fig. 9 illustrates a plane view of a variation of the mobile robot; and
Fig. 10 illustrates a side view of another variation of the mobile robot.

### DESCRIPTION OF THE EMBODIMENTS

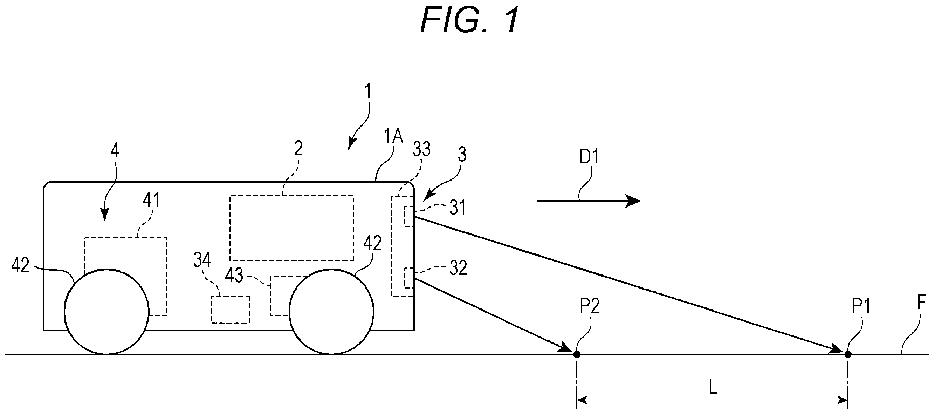

Hereinafter, one embodiment of the present invention will be described based on Figs. 1 to 8.

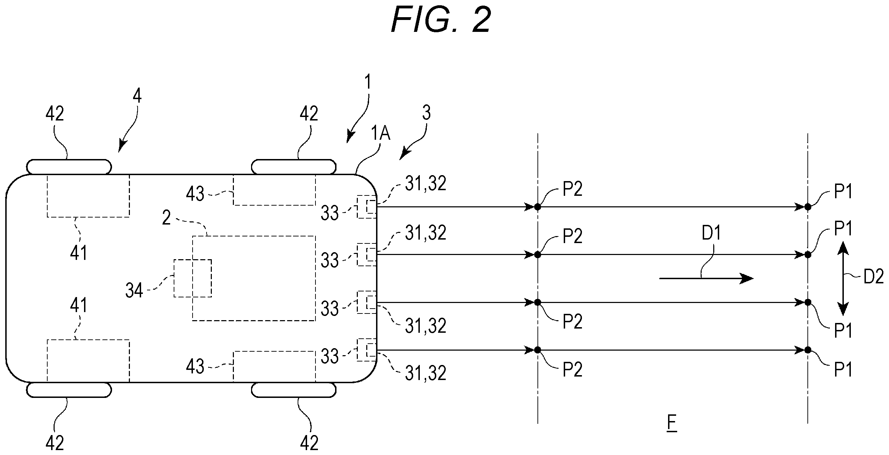

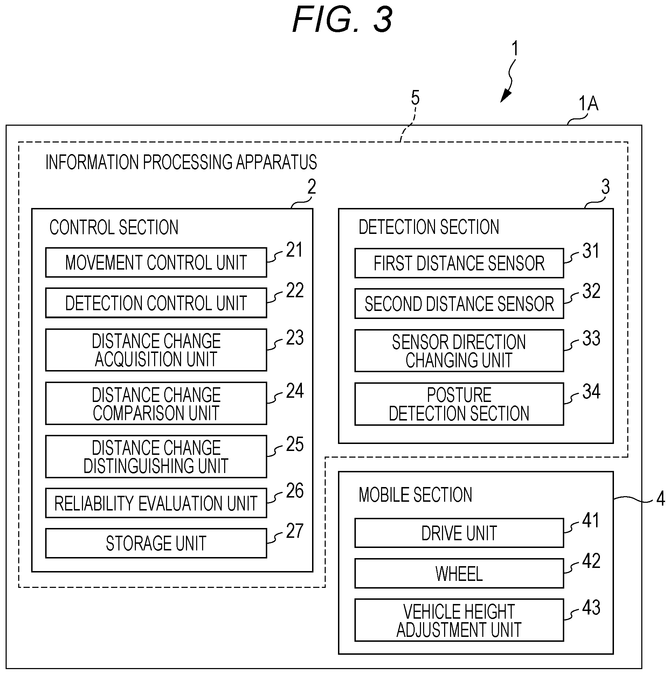

Fig. 1 illustrates a side view of a mobile robot according to one embodiment of the present invention, and Fig. 2 illustrates a plan view of the mobile robot. Fig. 3 illustrates a block diagram of the mobile robot. As illustrated in Figs. 1 to 3, the mobile robot 1 includes, for example, a robot body 1A as a mobile body running along a floor surface F as a predetermined surface in a room (environment), a control section 2 configured to drivably control each unit of the robot body 1A such that the robot body 1A autonomously runs, a detection section 3 configured to detect a target object around the robot body 1A and the posture of the robot body 1A, and a mobile section 4 configured to move the robot body 1A. Moreover, as illustrated in Fig. 3, the control section 2 and the detection section 3 form an information processing apparatus 5 configured to process movement information on the mobile robot 1.

The control section 2 includes an arithmetic section such as a CPU and a storage section such as a ROM or a RAM to control operation of the robot body 1A. As illustrated in Fig. 3, the control section 2 includes a movement control unit 21 configured to drivably control the mobile section 4, a detection control unit 22 configured to drivably control the detection section 3, a distance change acquisition unit 23, a distance change comparison unit 24, a distance change distinguishing unit 25, and a reliability evaluation unit 26 configured to process the movement information on the mobile robot 1 as described later, and a storage unit 27 configured to store various programs and various types of data.

The detection section 3 includes, for example, first distance sensors 31 and second distance sensors 32 as front sensors provided at a front portion of the robot body 1A, sensor direction changing units 33 configured to change the directions of distance detection by these distance sensors 31, 32, and a posture detection section 34 configured to detect the posture of the robot body 1A. The multiple first distance sensors 31 and the multiple second distance sensors 32 are provided at the front portion of the robot body 1A, and are for measuring a distance to the target object in the front of the robot body 1A. For example, the distance sensor 31, 32 may include a laser range finder configured to emit laser light such as infrared laser to measure the distance. The sensor direction changing unit 33 turns the first distance sensor 31 and the second distance sensor 32 in an upper-lower direction to change a laser light emission direction. The posture detection section 34 includes, for example, an acceleration sensor, and detects, e.g., the inclination of the robot body 1A with respect to a horizontal surface.

As illustrated in Figs. 1 and 2, the multiple first distance sensors 31 detect distances to first positions P1 on the floor surface in the front of the robot body 1A in a movement direction D1 thereof, and the multiple second distance sensors 32 detect distances to second positions P2 on the floor surface F in the front of the robot body 1A in the movement direction D1. As illustrated in Fig. 2, the multiple first distance sensors 31 and the multiple second distance sensors 32 detect the distances to the multiple first positions P1 and the multiple second positions P2 set along a cross direction D2 crossing the movement direction D1 of the robot body 1A. The second position P2 is set to a position closer to the robot body 1A than the first position P1 is to along the movement direction D1 of the robot body 1A, and a distance difference L between the first position P1 and the second position P2 on the flat floor surface F is set to a predetermined value. The second distance sensor 32 has a lower resolution than that of the first distance sensor 31. That is, the first distance sensor 31 includes a sensor with a higher (finer) distance resolution, and the second distance sensor 32 includes a sensor with a lower (rougher) distance resolution than that of the first distance sensor 31.

The mobile section 4 includes drive units 41 having a motor etc., four front, back, right, and left wheels 42, and vehicle height adjustment units 43 configured to change the heights of the front wheels to adjust the vehicle height of the robot body 1A. The drive units 41 independently rotatably drive the wheels 42 as the right and left back wheels, thereby moving the robot body 1A forward or backward or changing the direction of the robot body 1A. The vehicle height adjustment units 43 displace the wheels 42 as the right and left front wheels in the upper-lower direction, thereby adjusting the vehicle height of the robot body 1A.

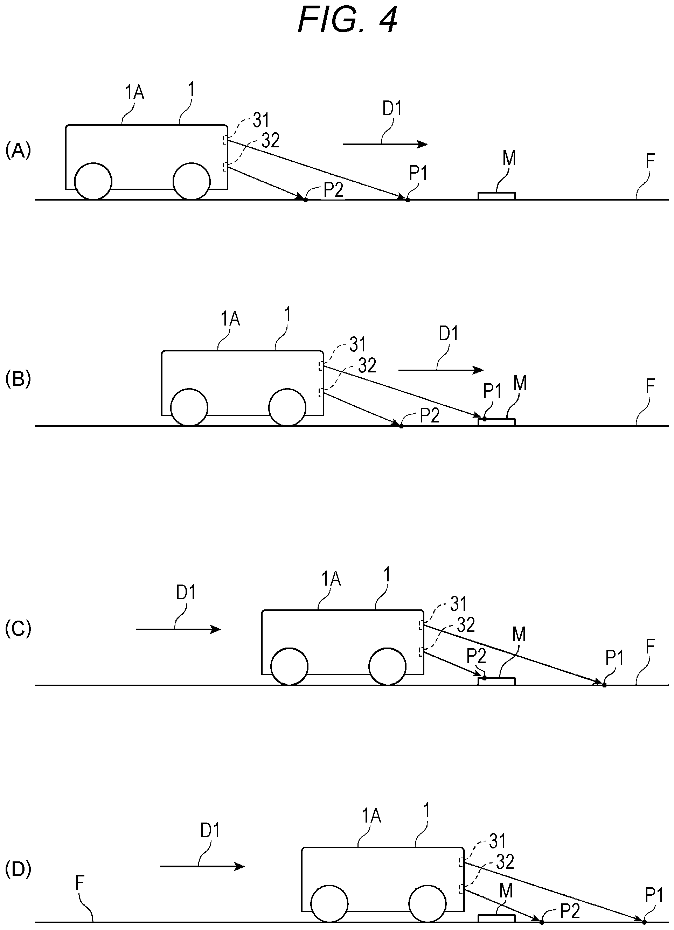

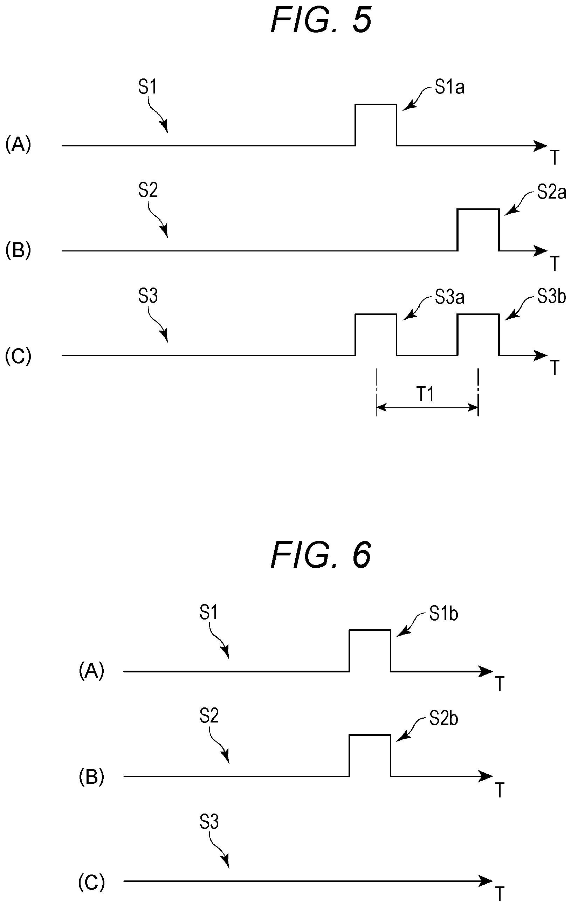

Fig. 4 illustrates views of operation of the mobile robot, and Fig. 5 illustrates conceptual diagrams of measurement information obtained by the mobile robot. When the mobile robot 1 runs forward in the movement direction D1 along the floor surface F as illustrated in Fig. 4(A), the first distance sensor 31 detects the distance to the first position P1 on the floor surface F, and the second distance sensor 32 detects the distance to the second position P2 on the floor surface F. Measurement data obtained by the first distance sensor 31 is transmitted to the distance change acquisition unit 23 of the control section 2. The distance change acquisition unit 23 acquires a change in the distance to the floor surface F, and as illustrated in Fig. 5(A), stores a first change value S1 in a chronological order in the storage unit 27 based on such a distance change. Measurement data obtained by the second distance sensor 32 is transmitted to the distance change acquisition unit 23. The distance change acquisition unit 23 acquires a change in the distance to the floor surface F, and as illustrated in Fig. 5(B), stores a second change value S2 in a chronological order in the storage unit 27 based on such a distance change. At this point, if the floor surface F is flat, a change is shown in neither the change value S1 nor the change value S2 (i.e., the change values S1, S2 are zero) or only minute values are shown as the change values S1, S2.

Next, in a case where an object M is present on the floor surface F in the front of the mobile robot 1 in the movement direction D1 as illustrated in Fig 4(B), when the first position P1 reaches the object M and the first distance sensor 31 detects a distance to the object M, the distance change acquisition unit 23 acquires such a distance change that the mobile robot 1 becomes closer to the object M than to the floor surface F, and stores a first change value S1a in the storage unit 27 as illustrated in Fig. 5(A). Further, when the second position P2 reaches the object M and the second distance sensor 32 detects the distance to the object M as illustrated in Fig. 4(C), the distance change acquisition unit 23 acquires such a distance change that the mobile robot 1 becomes closer to the object M than to the floor surface F, and stores a second change value S2a in the storage unit 27 as illustrated in Fig. 5(B). At this point, when the first position P1 reaches a position in the front of the object M, the first distance sensor 31 measures the distance to the floor surface F, and therefore, the first change value S1 becomes zero or a minute value again. Further, as illustrated in Fig. 4(D), when the second position P2 reaches a position in the front of the object M, the second change value S2 becomes zero or a minute value again.

When the first change value S1 and the second change value S2 are obtained as described above, the distance change comparison unit 24 of the control section 2 compares the first change value S1 and the second change value S2. For example, as a comparison method by the distance change comparison unit 24, a differential value S3 as a difference between the first change value S1 and the second change value S2 is calculated, and a time difference T1 between a first differential value S3a and a second differential value S3b remaining in the differential value S3 is calculated, as illustrated in Fig. 5(C). Based on the differential value S3 between the first change value S1 and the second change value S2 compared by the distance change comparison unit 24, the distance change distinguishing unit 25 distinguishes a distance change (a change with the same phase) due to a change in the posture of the mobile robot 1 and a distance change (a change with a phase difference) due to the shape of the floor surface F from each other. Specifically, when the first differential value S3a and the second differential value S3b are values equal to or greater than a predetermined threshold and the time difference T1 therebetween is a time difference (a phase difference) corresponding to the speed of the mobile robot 1, the distance change distinguishing unit 25 determines the change values S1a, S2a as the distance change due to the shape of the floor surface F (i.e., the object M). The time difference corresponding to the speed of the mobile robot 1 as described herein is a time difference obtained by division of the distance difference L between the first position P1 and the second position P2 by the speed of the mobile robot 1.

On the other hand, examples of the distance change due to the change in the posture of the mobile robot 1 may include a case illustrated in Fig. 6. Fig. 6 illustrates conceptual diagrams of measurement information obtained in association with the change in the posture of the mobile robot. Fig. 6(A) illustrates the value S1 of change in the distance to the floor surface F, the change value S1 being acquired by the distance change acquisition unit 23 based on the distance, which is detected by the first distance sensor 31, to the first position P1 on the floor surface F. Fig. 6(B) illustrates the value S2 of change in the distance to the floor surface F, the change value S2 being acquired by the distance change acquisition unit 23 based on the distance, which is detected by the second distance sensor 32, to the second position P2 on the floor surface F. In this case, in a case where the timing of occurrence of the change is substantially the same between the change values S1b, S2b, the differential value S3 calculated by the distance change comparison unit 24 as the difference between the first change value S1 and the second change value S2 is almost zero as illustrated in Fig. 6(C). In a case where the differential value S3 is almost zero as described above, the distance change distinguishing unit 25 determines that there is no time difference (phase difference) in the timing of occurrence of the change between the change values S1b, S2b and that the distance change is not the distance change due to the shape of the floor surface F but the distance change due to the change in the posture of the mobile robot 1.

The posture detection section 34 of the detection section 3 detects the change in the posture of the mobile robot 1. That is, when the robot body 1A vibrates or swings to tilt back and forth and right and left on the floor surface F due to, e.g., fine asperities of the floor surface F, seams of floorings or tiles, or carpet gaps, the posture change such as vibration, tilting, or swing is detected by the posture detection section 34 and is transmitted to the detection control unit 22. When the change in the posture of the robot body 1A is detected as described above, the reliability evaluation unit 26 of the control section 2 evaluates the reliabilities of the first change value S1 and the second change value S2 acquired by the distance change acquisition unit 23. Further, the distance change comparison unit 24 determines, based on evaluation results of the reliability evaluation unit 26, whether or not the first change value S1 and the second change value S2 are to be compared. That is, in a case where the reliability evaluation unit 26 evaluates that the change values S1, S2 are not reliable, comparison between the first change value S1 and the second change value S2 by the distance change comparison unit 24 as described above is not executed.

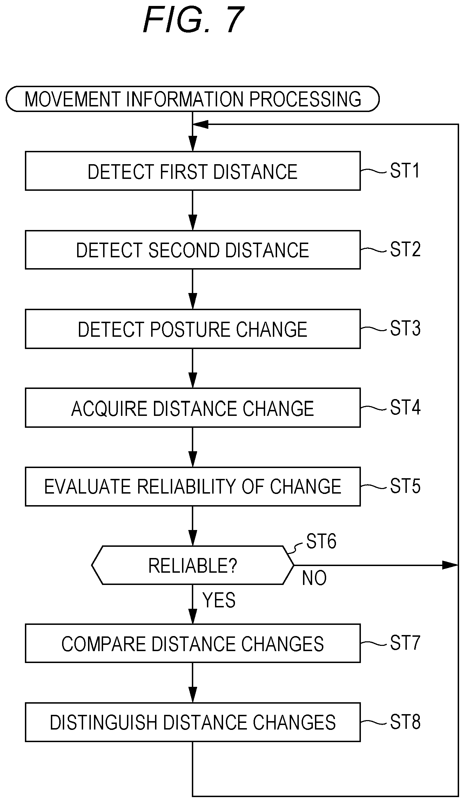

The steps of processing the movement information on the mobile robot 1 by the information processing apparatus 5 (the control section 2 and the detection section 3) as described above will be also described with reference to Fig. 7. Fig. 7 illustrates a flowchart of the steps of processing by the information processing apparatus in the mobile robot. The information processing apparatus 5 repeats steps ST1 to ST8 illustrated in Fig. 7 in a predetermined cycle (e.g., a short time of about 0.1 seconds), thereby processing the movement information on the mobile robot 1.

When the control section 2 starts the movement information processing while the mobile robot 1 is moving, the detection control unit 22 causes the first distance sensor 31 to detect the distance to the first position P1 (a first distance detection step: the step ST1), and causes the second distance sensor 32 to detect the distance to the second position P2 (a second distance detection step: the step ST2). Moreover, the detection control unit 22 causes the posture detection section 34 to detect the change in the posture of the robot body 1A (a posture change detection step: the step ST3). After the distances to the first position P1 and the second position P2 have been detected at the distance detection steps (the steps ST1, ST2), the distance change acquisition unit 23 acquires the change in the distance to the floor surface F, and causes the storage unit 27 to store the change values S1, S2 (a distance change acquisition step: the step ST4). After the change in the posture of the robot body 1A has been detected at the posture change detection step (the step ST3), the reliability evaluation unit 26 evaluates the reliabilities of the change values S1, S2 (a reliability evaluation step: the step ST5).

In a case where it is, at the reliability evaluation step (the step ST5), determined that the change values S1, S2 are not reliable (NO at the step ST6), the control section 2 returns the processing to the first distance detection step (the step ST1) to repeat each of the above-described steps ST1 to ST5. In a case where it is, at the reliability evaluation step (the step ST5), determined that the change values S1, S2 are reliable (YES at the step ST5), the control section 2 executes the subsequent step ST7. That is, the distance change comparison unit 24 calculates the differential value S3 as the difference between the first change value S1 and the second change value S2 (a distance change comparison step: the step ST7). Next, the distance change distinguishing unit 25 distinguishes, based on the differential value S3, the distance change due to the change in the posture of the mobile robot 1 and the distance change due to the shape of the floor surface F (a distance change distinguishing step: the step ST8), and thereafter, the processing returns to the first distance detection step (the step ST1).

The movement information on the mobile robot 1 is processed as described above, and in this manner, the control section 2 constantly determines whether or not the floor surface F in the front of the robot body 1A in the movement direction D1 is flat and the robot body 1A can run on the floor surface F or whether or not, e.g., asperities or an obstacle (the object M) are present on the floor surface F in the front of the robot body 1A in the movement direction D1 while the robot body 1A is running by means of the mobile section 4. In a case where the obstacle (the object M) is present on the floor surface F in the front of the robot body 1A in the movement direction D1, the height of the object M from the floor surface F is also determined, and therefore, the control section 2 determines whether or not the robot body 1A can move over the object M. In a case where it is determined that the robot body 1A cannot move over the object M, the control section 2 drivably controls the mobile section 4 by the movement control unit 21 to avoid the object M. In a case where it is determined that the robot body 1A can move over the object M without the need for adjusting the vehicle height of the robot body 1A, the control section 2 continues drive control of the mobile section 4 by the movement control unit 21 such that the robot body 1A moves over the object M.

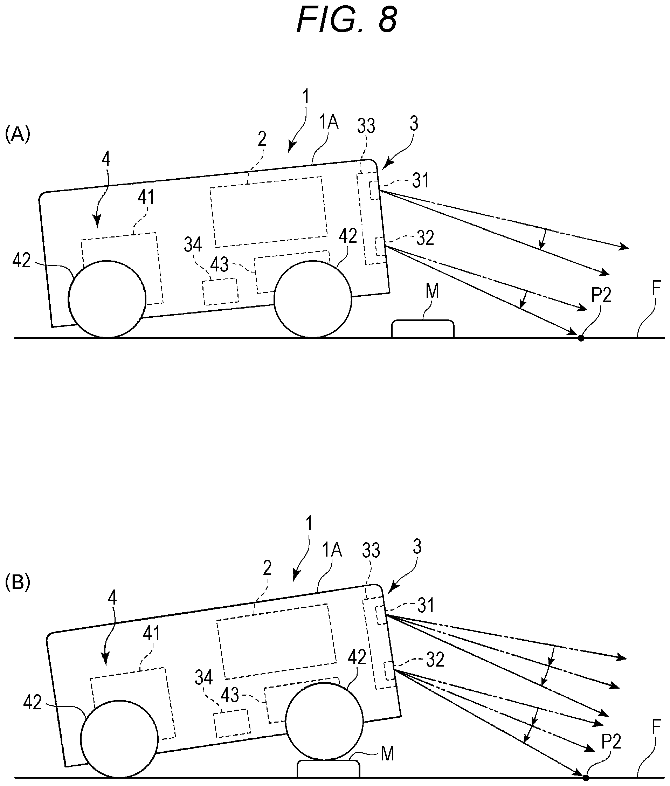

On the other hand, in a case where it is determined that the robot body 1A can move over the object M if the vehicle height of the robot body 1A is adjusted, the control section 2 drivably controls the vehicle height adjustment units 43 by the movement control unit 21 to downwardly displace the wheels 42 as the right and left front wheels as illustrated in Fig. 8, and in this manner, increases the vehicle height of the robot body 1A on the front side. Fig. 8 illustrates views of vehicle height adjustment operation of the mobile robot. When the vehicle height of the robot body 1A on the front side is increased by the vehicle height adjustment units 43 as illustrated in Fig. 8(A), the posture of the robot body 1A is changed, and therefore, the directions of the first distance sensors 31 and the second distance sensors 32 are changed. When such a posture change is detected by the posture detection section 34, the control section 2 drivably controls the sensor direction changing units 33 by the detection control unit 22 to change the directions of the first distance sensors 31 and the second distance sensors 32 to downward directions. When the wheels 42 as the front wheels move over the object M and the posture of the robot body 1A is further changed as illustrated in Fig. 8(B), the sensor direction changing units 33 further change, under the control of the detection control unit 22, the directions of the first distance sensors 31 and the second distance sensors 32 to the downward directions based on detection of the posture detection section 34.

According to the present embodiment as described above, the following features/advantageous effects can be provided.
(1) The control section 2 of the mobile robot distinguishes, by the distance change distinguishing unit 25, the distance change (the change with the same phase) due to the change in the posture of the robot body 1A and the distance change (the change with the phase difference) due to the shape of the floor surface F in the environment from each other, and excludes the distance change due to the change in the posture of the robot body 1A while employing the distance change due to the shape of the floor surface F. Thus, the target object such as asperities or an obstacle can be accurately detected. Thus, influence of the change in the posture of the robot body 1A on distance measurement can be reduced, and the accuracy of measurement of the distance to the target object on the floor surface F, such as asperities or an obstacle, can be improved.

(2) The first distance sensors 31 and the second distance sensors 32 detect the distances to the multiple first positions P1 and the multiple second positions P2 along the cross direction D2 crossing the movement direction D1 of the robot body 1A, and therefore, the distance change due to the shape of the floor surface F can be detected within an area corresponding to the robot body 1A.

(3) The second distance sensor 32 has a lower resolution than that of the first distance sensor 31, and therefore, when the distance to the second position P2 at the position closer to the robot body 1A than the first position P1 is to is detected along the movement direction D1, balance with the change in the distance, which is detected by the first distance sensor 31, to the first position P1 can be achieved. Thus, the distance change distinguishing unit 25 can easily distinguish the distance change due to the change in the posture of the robot body 1A and the distance change due to the shape of the floor surface F from each other.

(4) The distance change comparison unit 24 determines, based on the evaluation results of the reliability evaluation unit 26, whether or not the changes, which are acquired by the distance change acquisition unit 23, in the distances to the first position P1 and the second position P2 are to be compared, and therefore, comparison between the less-reliable changes in the distances to the first position P1 and the second position P2 can be avoided and a calculation cost can be reduced.

(5) The control section 2 changes the directions of the first distance sensors 31 and the second distance sensors 32 by the sensor direction changing units 33 based on the change in the posture of the robot body 1A detected by the posture detection section 34 so that a distance to the floor surface F in a predetermined direction can be detected. Thus, even in a case where the posture of the robot body 1A has changed, the distance to the floor surface F in the environment can be reliably detected.

### [Variations of Embodiment]

Note that the present invention is not limited to the above-described embodiment, and variations, modifications, etc. made within such a scope that the object of the present invention can be achieved are included in the present invention.

For example, in the above-described embodiment, specific examples have not been described as the mobile robot 1. Examples of the mobile robot include a service robot and a home robot. More specifically, the examples may include a cleaning robot, a security robot, a transfer robot, and a guidance robot. Further, a movement area of the mobile body is not limited to a two-dimensional planar space, and may be a three-dimensional space. In this case, the mobile body may be a flying body such as a drone. Moreover, the predetermined surface in the environment is not limited to the horizontal surface such as the floor surface F, and may be a flat surface such as a vertical surface or an inclined surface or may be an optional curved surface.

In the above-described embodiment, the control section 2 and the detection section 3 forming the information processing apparatus 5 are provided at the robot body 1A as the mobile body. However, the entirety or part of the control section 2 is not necessarily provided at the robot body 1A, but may be provided at other types of equipment communicable with the robot body 1A and the other types of equipment may implement all or some functions of the control section 2. The information processing apparatus of the present invention is not limited to application to the mobile robot 1, and can be also utilized for the purpose of processing movement information on a mobile body such as a self-driving automobile, a service vehicle, or a flying body. The mobile body is not limited to one including the mobile section 4 as in the mobile robot 1, and may be, e.g., a carriage moved by other apparatuses, persons, etc.

In the above-described embodiment, it is configured such that the distance change comparison unit 24 determines, based on the evaluation results of the reliability evaluation unit 26, whether or not the changes, which are acquired by the distance change acquisition unit 23, in the distances to the first position P1 and the second position P2 are to be compared and no comparison between the distance changes is made in the case of a low reliability. However, it may be configured such that all distance changes are compared regardless of the reliability. In the above-described embodiment, the posture detection section 34 detects the change in the posture of the robot body 1A, and the sensor direction changing units 33 change the directions of the first distance sensors 31 and the second distance sensors 32. However, the posture detection section 34 and the sensor direction changing unit 33 are not essential configurations for the present invention, and can be omitted as necessary.

In the above-described embodiment, the first distance sensor 31 and the second distance sensor 32 are configured as the laser range finders configured to emit the laser light to measure the distances, but the distance sensor is not limited to the laser range finder. The distance sensor may be an optical sensor such as an infrared sensor or light detection and ranging or laser imaging detection and ranging (LIDAR) or an ultrasonic sensor. Alternatively, the distance sensor may be an image sensor having a camera and an imaging element. In the above-described embodiment, the acceleration sensor has been described as an example of the posture detection section 34, but the posture detection section 34 is not limited to above and may be a gyroscope sensor. In the above-described embodiment, the posture detection section 34 is configured to detect both of a fine change in the posture of the robot body 1A, such as vibration, tilting, or swing, and a great change in the posture of the robot body 1A due to the change in the vehicle height by the vehicle height adjustment units 43 or movement of the robot body 1A over the object M. However, separate sensors may form a first posture detection section configured to detect the fine posture change and a second posture detection section configured to detect the great posture change.

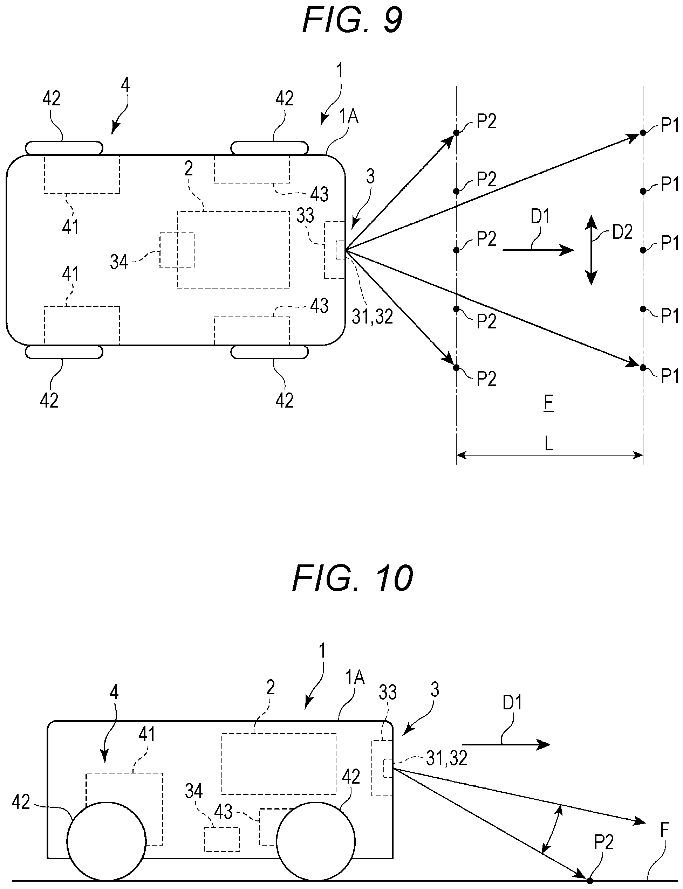

In the above-described embodiment, the multiple first distance sensors 31 and the multiple second distance sensors 32 are provided at the front portion of the robot body 1A, but the present invention is not limited to above. A configuration illustrated in Fig. 9 can be employed. Fig. 9 illustrates a plan view of a variation of the mobile robot. As illustrated in Fig. 9, the single first distance sensor 31 and the single second distance sensor 32 are provided at the center of the front portion of the robot body 1A, and are provided to turn right and left. With this configuration, the distances to the multiple first positions P1 and the multiple second positions P2 along the cross direction D2 are detected.

In the above-described embodiment, the first distance sensor 31 and the second distance sensor 32 are configured as separate sensors, but the present invention is not limited to above. A configuration illustrated in Fig. 10 can be employed. Fig. 10 illustrates a side view of another variation of the mobile robot. As illustrated in Fig. 10, a single sensor forms the first distance sensor 31 and the second distance sensor 32, and the first position P1 and the second position P2 are identified according to a detection area of the distance sensor 31, 32 in the upper-lower direction. Moreover, the single distance sensor 31, 32 may be turned up and down by the sensor direction changing unit 33 to change the detected distance from the robot body 1A, and accordingly, the distances to the first position P1 and the second position P2 may be detected. The second distance sensor 32 is not limited to one having a lower resolution than that of the first distance sensor 31. The first distance sensor 31 and the second distance sensor 32 may have the same resolution, or the second distance sensor 32 may have a higher resolution than that of the first distance sensor 31.

### INDUSTRIAL APPLICABILITY

As described above, the present invention can be suitably utilized for an information processing apparatus and a mobile robot so that influence of a change in the posture of a mobile body can be reduced and the accuracy of measurement of a distance to a target object can be improved.

### LIST OF THE REFERENCE NUMERALS

- 1: Mobile robot
- 1A: Robot body
- 2: Control section
- 3: Detection section
- 4: Mobile section
- 5: Information processing apparatus
- 23: Distance change acquisition unit
- 24: Distance change comparison unit
- 25: Distance change distinguishing unit
- 26: Reliability evaluation unit
- 31: First distance sensor
- 32: Second distance sensor
- 33: Sensor direction changing unit
- 34: Posture detection section
- F: Floor surface (predetermined surface)
- M: Object
- P1: First position
- P2: Second position

## Claims

1. An information processing apparatus for processing movement information on a mobile body moving along a predetermined surface in environment, comprising:
a first distance sensor provided at the mobile body and configured to detect a distance to a first position on the predetermined surface;
a second distance sensor provided at the mobile body and configured to detect a distance to a second position on the predetermined surface; and
a control section configured to control the first distance sensor and the second distance sensor,
wherein the second position is set to a position closer to the mobile body than the first position is to along a movement direction of the mobile body, and
the control section includes
a distance change acquisition unit configured to acquire changes in the distances, which are detected by the first distance sensor and the second distance sensor, to the first position and the second position,
a distance change comparison unit configured to compare the changes, which are acquired by the distance change acquisition unit, in the distances to the first position and the second position, and
a distance change distinguishing unit configured to distinguish, based on a comparison result obtained by the distance change comparison unit, a distance change due to a change in a posture of the mobile body and a distance change due to a shape of the predetermined surface.

2. The information processing apparatus according to claim 1, wherein
the first distance sensor detects distances to multiple first positions set along a cross direction crossing the movement direction of the mobile body, and
the second distance sensor detects distances to multiple second positions provided along the cross direction crossing the movement direction of the mobile body and corresponding to the multiple first positions.

3. The information processing apparatus according to claim 1 or 2, further comprising:
a posture detection section configured to detect the posture of the mobile body,
wherein the first distance sensor and the second distance sensor include a direction changing unit configured to change a distance detection direction, and
the control section
causes the direction changing unit to change the distance detection directions of the first distance sensor and the second distance sensor such that a distance to the predetermined surface is detectable in a case where the posture detection section has detected the change in the posture of the mobile body.

4. The information processing apparatus according to any one of claims 1 to 3, wherein
the second distance sensor has a lower resolution than that of the first distance sensor.

5. The information processing apparatus according to any one of claims 1 to 4, further comprising:
the posture detection section configured to detect the posture of the mobile body,
wherein the control section
includes a reliability evaluation unit configured to evaluate, based on the change in the posture of the mobile body detected by the posture detection section, reliabilities of the changes, which are acquired by the distance change acquisition unit, in the distances to the first position and the second position, and
the distance change comparison unit determines, based on an evaluation result of the reliability evaluation unit, whether or not the changes, which are acquired by the distance change acquisition unit, in the distances to the first position and the second position are to be compared.

6. A mobile robot comprising:
the information processing apparatus according to any one of claims 1 to 5; and
a mobile section configured to move the mobile body.
